# EUROPÄISCHE PATENTSCHRIFT

(11) **EP 0 861 950 B1**
(45) Veröffentlichungstag und Bekanntmachung des Hinweises auf die Patenterteilung: **29.12.2004**
(21) Anmeldenummer: 98102882.2
(22) Anmeldetag: 19.02.1998
(51) Int. Cl.: E04D 3/08, E04B 2/96, E04B 7/06

(54) **Profilverbindung**
Connection for profiled sections
Liaison pour profilés

(30) Priorität: 28.02.1997 DE 19708198
(43) Veröffentlichungstag der Anmeldung: 02.09.1998
(73) Patentinhaber: THYSSEN POLYMER GMBH, 94327 Bogen (DE)
(72) Erfinder: Pielmeier, Günter, 94327 Bogen (DE)

(56) Entgegenhaltungen:
- EP-A- 0 604 244
- EP-A- 0 864 707
- GB-A- 2 149 875

## Beschreibung

Die Erfindung betrifft Shifter-Profilverbindungen an Dachsparren von Wintergärten, mit dessen Hilfe ein Hohlkammerprofil, beispielsweise ein Sparrenprofil unter variablen Winkeln an einem anderen Hohlkammerprofil, beispielsweise einem Kämpferprofil oder Vollprofil befestigt werden kann, mit einem in das eine Hohlprofil eingesetzten Profilverbindungsglied.

Profilverbindungen dieser Art sind bereits bekannt. Solche Profilverbindungen sind z.B. in dem DE GM 93 03 883.6, dem DE GM 295 01 410 U1 bzw. der noch nicht veröffentlichten DE Patentanmeldung 196 31 891.2 beschrieben. Dabei sind verschiedene Winkel der Profilverbindung in einer Ebene möglich, jedoch nicht in mehreren Ebenen. Die EP 0 604 244 A1 zeigt eine Profilverbindung, die ein Kardangelenk offenbart, das eine Drehung um einen Zapfen und im Abstand davon eine Schwenkung um einen Bolzen erlaubt. Aus der GB 2 149 875 A geht ein Verbindungselement hervor, das eine Schwenkung um eine senkrecht stehende Spindel und eine Drehbewegung um einen Lagerzapfen offenbart, die jeweils durch Schraubelemente in einer bestimmten Position festlegbar sind.

Shifter-Profilverbindungen, beispielsweise von Dachsparren bei Wintergärten und dergl., konnten bisher nur durch winkeliges Anschneiden und anschließendes Verschweißen der Profile, vorzugsweise Stahlprofile, erreicht werden. Dabei gestaltet sich das Zuschneiden und Verschweißen der Stahlprofile als schwierig und aufwendig, da für die Ausführung dieser Arbeiten sehr teure Maschinen mit hoher Präzision erforderlich sind.

Der Erfindung, wie sie in den Ansprüchen beschrieben ist, liegt daher die Aufgabe zugrunde, eine einfach herzustellende Shifter-Profilverbindung für Wintergärten zu schaffen, die das Verbinden von Profilen in drei Ebenen ermöglicht.

Die mit der Erfindung erzielbaren Vorteile liegen insbesondere darin, daß die Profilverbindung auf einfache Weise mittels Formteilen durch Verschrauben und Verschiften in drei Ebenen von 45°-90° möglich ist. Verschweißungen sind nicht mehr erforderlich, ebenso der Einsatz von Maschinen und sonstigen aufwendigen und zeitraubenden Arbeitsgängen.

Die Erfindung ist nachstehend anhand eines in den Abbildungen dargestellten Ausführungsbeispieles näher erläutert.

Es zeigt:
- Fig. 1:: einen Wintergarten,
- Fig. 2:: eine erfindungsgemäße Schifterverbindung

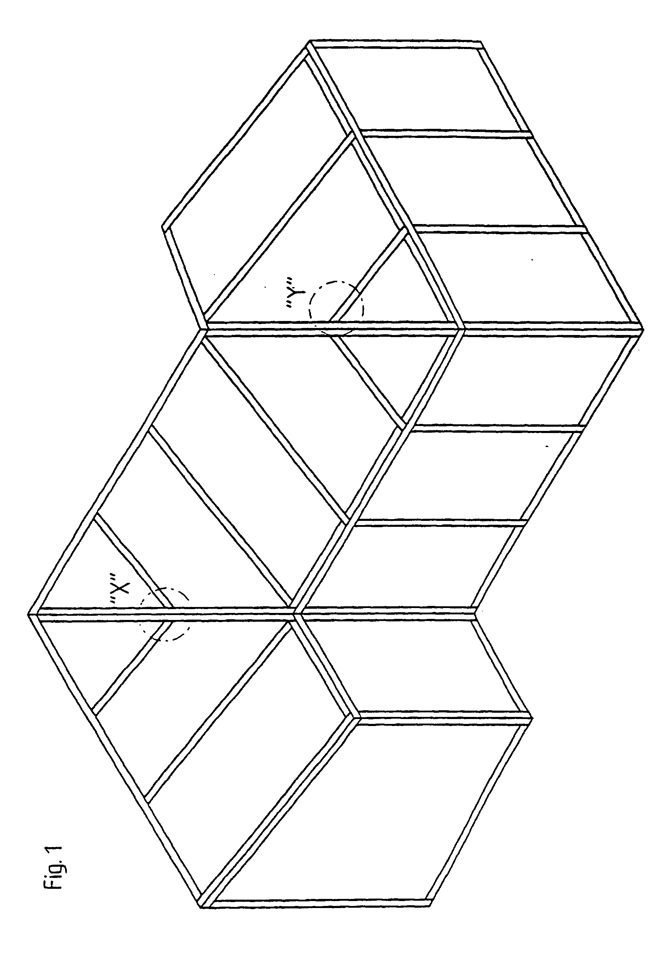

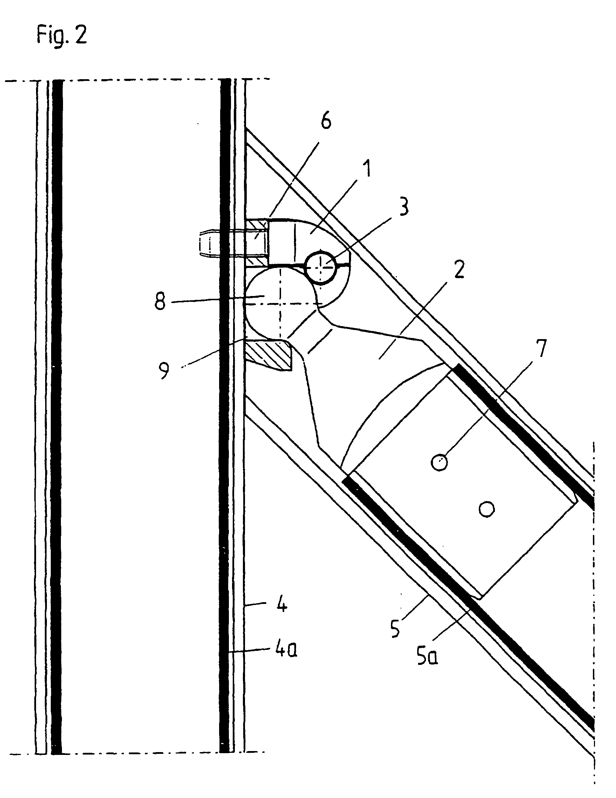

Die in der Figur 1 erkennbaren Schifter-Profilverbindungen "X" un "Y" sind anhand der Figur 2 näher beschrieben.

Die Schifter-Profilverbindungen "X" und "Y" bestehen aus gleichen Teilen, sie sind jedoch unter unterschiedlichen Winkeln und Rihtungen vorgesehen.

Die Figur 2 zeigt eine an einem Profil 4a, z. B. einem Gratsparren, mittels einer oder mehrerer Schrauben 6 befestigte Halterung 1, beispielsweise eine Befestigungsplatte, in deren Aufnahme 9 der Kugelkopf 8 des Profilverbindungselementes 2, z.B. eines Sparrenverbinders eingeführt und mittels eines Spannstiftes 3 fixiert ist. Die Rückseite des Verbinders 2 ist derart ausgebildet, daß sie mit einem Profil 5a auf geeignete Weise, beispielsweise durch Befestigungsmittel wie in die Schraubkanäle 7 eingedrehte Schrauben oder dergl., verbunden werden kann. Im dargestellten Beispiel ist das Profil 5a als Hohlprofil ausgebildet in welches das Profilverbindungselement einschiebbar und mit diesem verschraubbar ist. Es können beispielsweise auch Vollprofile dafür eingesetzt werden.

Die angegebene Profilverbindung ist hinsichtlich der Winkel und Ebenen unter denen die beiden Profile 4a, 5a verbunden werden können, in weiten Grenzen variabel. So können im dargestellten Beispiel die beiden Profile 4a und 5a in drei Ebenen unter Winkeln zwischen 45° und 90° miteinander verbunden werden.

Als Werkstoffe haben sich besonders Stahl für die Profile 4a und 5a bewährt, über die als Verkleidungsprofile 4,5 ausgebildete Kunststoffhohlkammerprofile geschoben oder aufgeklipst sind.

Die Erfindung ist selbstverständlich nicht auf die beschriebene Anwendung bei Wintergärten beschränkt. Sie kann mit Vorteil auch auf anderen Gebieten eingesetzt werden, wie beispielsweise bei Gewächshäusern, Fassaden, Fenstern, Türen, Gitterwerken usw.

### BEZUGSZEICHENLISTE

- 1: Halterung
- 2: Profilverbindungselement
- 3: Spannstift
- 4a: Profil (Gratsparren)
- 4: Verkleidungsprofil
- 5a: Profil
- 5: Verkleidungsprofil
- 6: Befestigungsmittel (Schrauben)
- 7: Befestigungsmittel (Schraubkanäle)
- 8: Kugelkopf
- 9: Aufnahme

## Patentansprüche

1. Schifter-Dachsparrenverbindung für Wintergärten, umfassend einen Gratsparren (4a), beispielsweise ein Hohlkammerprofil, ein an dem Gratsparren (4a) zu verbindendes Profil (5a), beispielsweise ein Sparrenprofil, und ein Profilverbindungselement (2) zum unter variablen Winkeln gelenkigen Verbinden des Profils (5a) an dem Gratsparren (4a), **dadurch gekennzeichnet, daß** das Profilverbindungselement (2) einerseits mit dem an dem Gratsparren (4a) zu verbindenden Profil (5a) fest und anderseits mit einer an dem Gratsparren (4a) befestigten Halterung (1) mittels eines am oberen Ende des Profilverbindungselements (2) vorgesehenen Kugelkopfes (8) und einer zu dessen Aufnahme am Gratsparren (4a) angeordneten Aufnahme (9) der Halterung (8) dreh-, schwenk- und in unterschiedlichen Richtungen festlegbar verbunden ist, wobei die Schwenkbewegungen des Profilverbindungselements in drei Ebenen erfolgen können.

2. Profilverbindung für Bauwerke nach Anspruch 1, **dadurch gekennzeichnet, daß** das Profilverbindungselement (2) an seinem unteren Ende Befestigungsmittel (7) für das Profil (5a) besitzt.

3. Profilverbindung für Bauwerke nach Anspruch 1 und 2, **dadurch gekennzeichnet, daß** der Kugelkopf (8) des Profilverbindungselementes (2) in der Aufnahme (9) der Halterung (1) mittels eines Spannstiftes (3) in einer beliebigen Richtung zum Gratsparren (4a) fixierbar ist.

## Claims

1. Jack-rafter connection for winter gardens, comprising an angle rafter (4a), for example a cavity-type profile, a profile (5a) to be connected to the angle rafter (4a), for example a rafter profile, and a profile connecting element (2) for an articulated connection of the profile (5a) to the angle rafter (4a) at variable angles, **characterised in that** the profile connecting element (2) has, on the one hand, a fixed connection to the profile (5a) to be connected to the angle rafter (4a), and, on the other hand, a rotating, swivelling and in different directions definable connection to a bracket (1) attached to the angle rafter (4a) by means of a ball head (8) provided at the upper end of the profile connecting element (2) and a holding fixture (9) for the bracket (1) located on the angle rafter (4a) to receive said ball head, with the swivel movements of the profile connecting element being possible in three planes.

2. Profile connection for structures in accordance with Claim 1, **characterised in that** the profile connecting element (2) has fixtures (7) at its lower end for the profile (5a).

3. Profile connection for structures in accordance with Claims 1 and 2, **characterised in that** the ball head (8) of the profile connecting element (2) can be fixed in the holding fixture (9) of the bracket (1) by means of a spring-type slotted straight pin (3) at any angle to the angle rafter (4a).

## Revendications

1. Assemblage d'avant-toit à linçoir pour jardins d'hiver, comportant une ferme d'arêtier (4a), par exemple un profil creux, un profil (5a) à relier à la ferme d'arêtier (4a), par exemple un profil de chevron, et un élément de jonction de profils (2), pour la jonction articulée à angles variables du profil (5a) à la ferme d'arêtier (4a), **caractérisé par le fait que** l'élément de jonction de profils (2) est relié d'une part de manière fixe au profil (5a) à relier à la ferme d'arêtier (4a) et d'autre part à un support (1) fixé à la ferme d'arêtier (4a) au moyen d'une tête sphérique (8) prévue à l'extrémité supérieure de l'élément de jonction de profils (2) et d'un logement (9) du support (1) agencé au niveau de la ferme d'arêtier (4a) pour le logement de celle-ci, de manière à pouvoir être tourné, pivoté et fixé dans diverses directions, sachant que les mouvements de pivotement de l'élément de jonction de profils (2) peuvent se faire sur trois niveaux.

2. Jonction de profils pour ouvrages selon la revendication 1, **caractérisée par le fait que** l'élément de jonction de profils (2) possède à son extrémité inférieure du matériel de fixation (7) pour le profil (5a).

3. Jonction de profils pour ouvrages selon les revendications 1 et 2, **caractérisée par le fait que** la tête sphérique (8) de l'élément de jonction de profils (2) est fixable, dans le logement (9) du support (1) au moyen d'une goupille de serrage (3) dans une direction quelconque par rapport à la ferme d'arêtier (4a).
